# EUROPÄISCHE PATENTSCHRIFT

(11) **EP 0 580 890 B1**
(45) Veröffentlichungstag und Bekanntmachung des Hinweises auf die Patenterteilung: **28.05.1997**
(21) Anmeldenummer: 92113044.9
(22) Anmeldetag: 31.07.1992
(51) Int. Cl.: A45C 11/18

(54) **Aufnahmeelement für Scheckkarten**
Holder for cards
Etui pour cartes

(43) Veröffentlichungstag der Anmeldung: 02.02.1994
(73) Patentinhaber: Ritter, Gerhard, 74076 Heilbronn (DE)
(72) Erfinder: Ritter, Gerhard, 74076 Heilbronn (DE)
(74) Vertreter: Ott, Elmar, Dipl.-Ing.

(56) Entgegenhaltungen:
- EP-A- 0 121 598
- WO-A-91/01096
- DE-A- 3 537 499
- DE-U- 8 700 307
- US-A- 1 656 615
- US-A- 3 308 989

## Beschreibung

Die Erfindung betriffte ein Aufnahmeelement für Scheckkarten gemäß dem Oberbegriff des Anspruchs 1.

Aus dem deutschen Gebrauchsmuster G 91 03 928 ist ein derartiges Aufnahmeelement bekannt, welches einen flachen Aufnahmeraum für Scheckkarten, Kreditkarten, Identitätskarten, Zugangskontrollkarten oder dergleichen dünnwandige Karten umschließt. Diese Karten werden an einer Schmalseite des Aufnahmeelements in den Aufnahmeraum eingeschoben. Das aus biegesteifem Kunststoffmaterial als einstückiges Kunststoffspritzteil hergestellte Aufnahmeelement dient als flache Schutzhülle für die jeweils darin aufbewahrte Karte. Um die eingeschobene Karte wieder aus dem Aufnahmeraum entnehmen zu können, besitzt das bekannte Aufnahmeelement in einer seiner Breitseiten eine Eingrifföffnung, die so groß ist, daß mit dem Daumen die eingeschobene Karte ergriffen und seitlich verschoben werden kann. Im Bereich der Eingrifföffnung ist die Karte also frei zugänglich, weshalb in diesem ungeschützten Bereich kein Magnetstreifen oder sonstige Elemente an der Karte angeordnet sein dürfen, die leicht zu beschädigen sind.

Aus der WO 91/01096 ist ein Aufnahmeelement für Kreditkarten oder dergleichen bekannt, bei dem in einem Gehäuse ein Einsatz zur Aufnahme der Karte vorgesehen ist, wobei der Einsatz an einer Flachseite einen Knopf aufweist, der aus dem Gehäuse herausragt und infolgedessen ein Vorschieben des Einsatzes aus dem Gehäuse zur besseren Entnahme der Karte ermöglicht. Das Gehäuse ist aus zwei Gehäusehälften zusammengesetzt und weist zwei Einsätze auf.

Die US-A-1 656 615 offenbart ein Aufnahmeelement aus Leder oder ähnlichem flexiblem Material zur Aufnahme von einer oder mehreren Karten. Das Aufnahmeelement weist einen Schieber auf, der auf einer Flachseite angeordnet ist und mittels eines Mitnehmers die oberste Karte aus der Einschuböffnung herausbewegt. Die Einschuböffnung ist durch einen flexiblen Verschluß, der beim Herausschieben zur Seite bewegt wird, verschlossen.

Der Erfindung liegt die Aufgabe zugrunde, ein Aufnahmeelement der eingangs genannten Gattung zu schaffen, welches die eingeschobene Karte an deren Breitseiten vollständig umschließt und eine einfache nachträgliche Montage des Schiebers am fertigen Aufnahmeelement ermöglicht.

Die Lösung dieser Aufgabe erhält man durch die im Anspruch 1 aufgeführten Merkmale. Im Bereich einer der beiden Breitseiten des Aufnahmeelements ist ein in Richtung Einschuböffnung verschiebbarer Schieber angeordnet, der einen in den Aufnahmeraum ragenden Mitnehmer hat, der an der im Aufnahmeraum befindlichen Karte angreift. Das Betätigungselement des Schiebers ragt an der Oberseite der Breitseite durch einen Ausschnitt heraus und läßt sich innerhalb des Ausschnitts von einer rückwärtigen Aufbewahrungsposition in Richtung Einschuböffnung in eine Entnahmeposition verschieben. Die Ausschnittöffnung ist vom Schieber vollständig abgedeckt, so daß die gesamte Breitseite in jeder Schieberstellung vollständig geschlossen ist und einen optimalen Schutz für die im Aufnahmeraum befindliche Karte bietet.

Die Verwendung eines derartigen Schiebers hat den weiteren Vorteil, daß eine gleichermaßen einfache Handhabung für Rechtshänder und für Linkshänder beim Entnehmen der Karte aus dem Aufnahmeraum gegeben ist.

Der am Schieber ausgebildete Mitnehmer steht an dessen rückwärtigem Ende in den Aufnahmeraum ab und drückt beim Herausschieben der eingelegten Karte gegen deren rückwärtigen Rand.

Damit der Schieber sich von oben in den Ausschnitt einsetzen läßt, ist die Abmessung des Schiebers so gewählt, daß dieser in einer seiner beiden Endstellungen den Ausschnitt nur geringfügig an der Innenseite übergreift. Beim Einsetzen des Schiebers von oben genügt es diesen soweit durchzubiegen, daß sich dieser in einer der beiden Endstellungen durch den Ausschnitt einsetzen läßt.

Der Schieber wird zwischen zwei an der Innenwand der Breitseite angeordneten Führungsstegen geführt und drückt aufgrund seiner Vorspannung gegen die Innenwand der den Ausschnitt aufweisenden Breitseite. Der Schieber ist zu diesem Zweck vorzugsweise im nicht eingebauten Zustand geringfügig nach oben gewölbt, so daß er im eingebauten, geraden Zustand entsprechend nach oben vorgespannt ist. Diese Vorspannung ermöglicht es sehr einfache Führungselemente für den Schieber zu verwenden, nämlich einfache seitliche Führungsleisten.

Das Betätigungselement des Schiebers, welches auch als Schieberknopf bezeichnet werden kann, überragt den Seitenrand des Ausschnitts und der im Aufnahmeraum sich erstreckende schmale Streifen des Schiebers überragt den Ausschnitt ebenfalls, so daß dadurch der Schieber im Bereich des Ausschnitts längs verschiebbar gehalten wird.

Das Einsetzen des Schiebers wird dadurch begünstigt, daß wenigstens eine der Schmalseiten des Ausschnitts einen schräg nach unten abfallenden Begrenzungsrand hat.

Besonders vorteilhaft ist es, die obere Breitseite des Aufnahmeelements ballig nach oben gewölbt auszubilden. Dadurch ist die Unterbringung des Schiebers im Aufnahmeraum problemlos möglich, da die ballige Wölbung den Aufnahmeraum entsprechend erhöht, um darin genügend Platz für die aufzubewahrende Karte und den über der Karte im Aufnahmeraum sich erstreckenden Schieber zu erhalten. Außerdem hat die Wölbung an einer der Breitseiten den Vorteil, daß die sehr schmale Einschuböffnung insbesondere auch im mittleren Bereich eine öffnungsweite besitzt, die größer ist als die Materialstärke der einzuschiebenden Karte. Das Einschieben der Karte wird dadurch erleichtert.

Die bis auf die Einschuböffnung allseitig im Aufnahmeelement umschlossene Karte wird optimal gegen Beschädigungen geschützt, wobei mittels des Schiebers die Karte ohne Druck gegen deren Breitseiten aus dem Aufnahmeraum entnehmbar ist. Dadurch wird insbesondere gewährleistet, daß die Karte beim Herausschieben aus dem Aufnahmeraum in keiner Weise beeinträchtigt wird. Die Erfindung wird anhand eines in der Zeichnung dargestellten Ausführungsbeispiels näher erläutert.

Es zeigen:
Figur 1 die Vorderansicht des Aufnahmeelements für eine Scheckkarte oder dergleichen,
Figur 2 den Schnitt AA gemäß Figur 1,
Figur 3 die Rückseite des in Figur 1 dargestellten Aufnahmeelements,
Figur 4 den vergrößerten Schnitt BB gemäß Figur 1 und
Figur 5 den Schieber des Aufnahmeelements im nicht eingebauten Zustand.

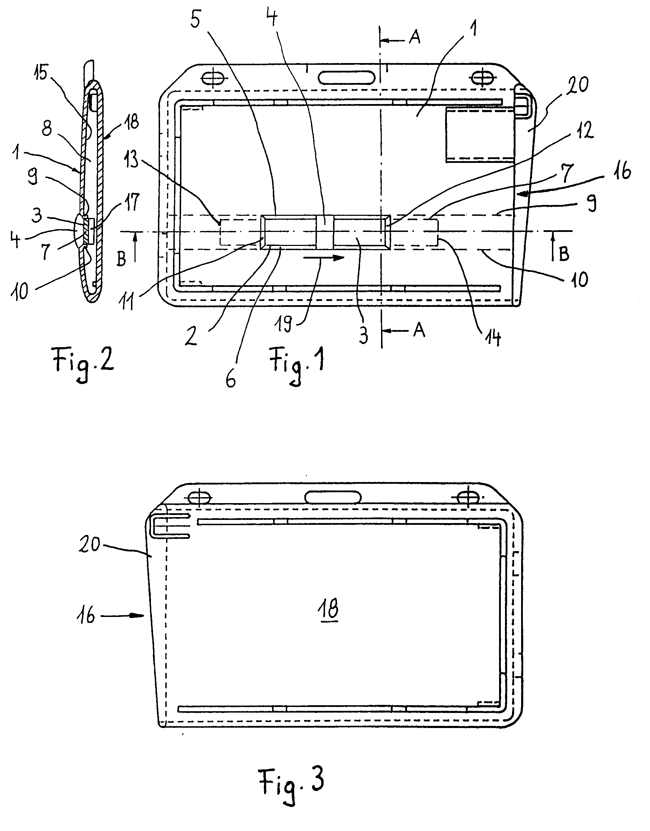

Das in Figur 1 dargestellte Aufnahmeelement dient als Schutzülle für Scheckkarten oder dergleichen dünnwandige Karten und besteht aus einem biegesteifen Kunststoffmaterial, beispielsweise aus Polycarbonat. Dieses Material ist vorzugsweise UV-stabilisiert.

Die sichtbare Breitseite 1 besitzt einen rechteckigen Ausschnitt 2, in den ein Schieber 3 eingesetzt ist. An der Oberseite des Schiebers 3 steht ein Betätigungselement 4 ab, das die beiden Seitenränder 5, 6 des Ausschnitts übergreift. Ein schmaler Streifen 7, der sich im Aufnahmeraum 8 (Figur 2) des Aufnahmeelements befindet, streckt sich über den Ausschnitt 2 hinaus und liegt zwischen Führungsstegen 9, 10 ein. In Figur 1 sind die durch die Breitseite 1 abgedeckten Teile mit unterbrochenen Linien eingezeichnet.

Die beiden Seitenränder 5, 6 und die an den Schmalseiten des Ausschnitts 2 ausgebildeten Begrenzungsränder 11, 12 fallen schräg nach unten ab. Die Abmessungen des Schiebers 3 und des Ausschnitts 2 sind so gewählt, daß sich der Schieber 3 oben in den Ausschnitt 2 einsetzen läßt, wobei er geringfügig gebogen wird, bis er durch den Ausschnitt 2 paßt. Da das rückwärtige Ende 13 und das vordere Ende 14 des Schiebers 3 den Ausschnitt 2 in jeder Schieberstellung an der Innenwand 15 (Figur 2) geringfügig überragt und das Betätigungselement 4 den Ausschnitt 2 an der Oberseite im Bereich der Seitenränder 5, 6 übergreift, wird der Schieber 3 an der Breitseite 1 sicher gehalten.

Das Aufnahmeelement besitzt eine Einschuböffnung 16 an einer seiner Schmalseiten, durch die eine Karte in den Aufnahmeraum 8 einschiebbar ist. Der Schieber 3, der an seinem rückwärtigen Ende 13 einen rechtwinklig in den Aufnahmeraum abstehenden Mitnehmer 17 (Figur 2) hat, wird dabei in die Aufbewahrungsposition nach links verschoben. In Figur 1 befindet sich der Schieber 3 in einer mittleren Position zwischen der Aufbewahrungsposition und der Entnahmeposition.

In Figur 2, die den Schnitt AA zeigt, ist insbesondere die ballige Wölbung der oberen Breitseite 1 ersichtlich. Durch die Wölbung verbreitert sich der Aufnahmeraum 8 entsprechend, so daß der schmale Streifen 7 des Schiebers 3 zusammen mit einer in dem Aufnahmeraum 8 aufzubewahrenden Scheckkarte oder dergleichen genügend Platz haben.

In Figur 3 ist die untere Breitseite 18 des Aufnahmeelements ersichtlich. Beide Breitseiten 1, 18 bilden zusammen mit dem den Ausschnitt 2 abdeckenden Schieber 3 eine vollständige Abdeckung für eine im Aufnahmeraum 8 befindliche Karte. Die Karte wird so weit in den Aufnahmeraum 8 eingeschoben, daß sie an der Einschuböffnung 16 nicht mehr übersteht. Beim Herausschieben greift der Mitnehmer 17 am rückwärtigem Rand der eingeschobenen Karte an und befördert diese durch eine Längsbewegung des Betätigungselements 4 in Pfeilrichtung 19 (Figur 1) aus der Einschuböffnung 16 heraus. Im Bereich der Einschuböffnung 16 ist die untere Breitseite 18 etwas überstehend ausgebildet, wodurch das Einführen einer Karte in die Einschuböffnung 16 erleichtert wird. Der sich dadurch ergebende überstehende Teil 20 bildet somit eine Einschubhilfe, die jedoch nicht zwingend erforderlich ist.

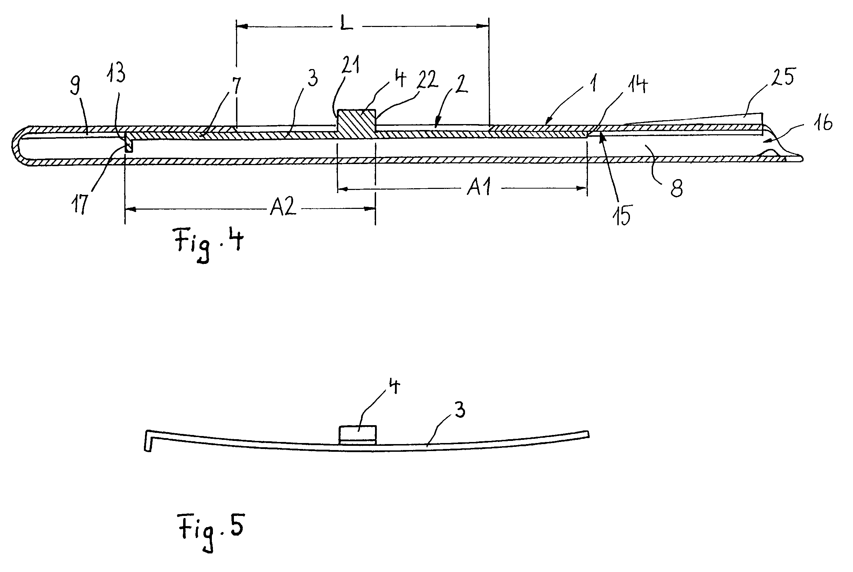

In der vergrößerten Darstellung von Figur 4 ist der Schnitt BB von Figur 1 gezeigt. Der schmale Streifen 7 des Schiebers 3 erstreckt sich unterhalb der oberen Breitseite 1 im Aufnahmeraum 8. Im nicht eingebautem Zustand ist der schmale Streifen 7 des Schieber 3 wie in Figur 5 dargestellt nach oben gewölbt. Im eingebauten Zustand, wie er in Figur 4 dargestellt ist, wird der aus Kunststoffmaterial bestehende, elastische Schieber 3 gerade gebogen, so daß er aufgrund seiner Vorspannung an die Innenwand 15 drückt und sicher zwischen den Führungsstegen 9, 10 gehalten wird.

Die Länge L des Ausschnitts 2 ist geringfügig kleiner als der Abstand A1 vom rückwärtigem Ende 21 des Betätigungselements 4 bis zu dem vorderen Ende 14 des Schiebers 3. Dadurch wird erreicht, daß der Schieber 3 den Ausschnitt 2 auch in der linken Endstellung vollständig aber nur so geringfügig überdeckt, daß der Schieber 3 durch den Ausschnitt 2 von oben einsetzbar ist.

Die Länge L ist auch kleiner als der Abstand A2 des vorderen Endes 22 des Betätigungselements 4 bis zum rückwärtigen Ende 13 des Schiebers 3.

Es sei noch erwähnt, daß an der oberen Breitseite 1 eine Rampe 25 ausgebildet ist, die beim Einschieben einer Karte mit Magnetstreifen den Magnetstreifen vor Beschädigungen schützt. Die Rampe 25 ist ebenso wie das federnde Sicherungselement 26 aus dem genannten deutschen Gebrauchsmuster G 91 03 928 bekannt.

## Patentansprüche

1. Aufnahmeelement aus Kunststoff für Scheckkarten, Kreditkarten, Identitätskarten, Zugangskontrollkarten oder dergleichen dünnwandige Karten, das einen flachen Aufnahmeraum (8) umschließt, der an einer Schmalseite eine Einschuböffnung (16) für eine Karte hat und einen in Richtung (19) Einschuböffnung (16) verschiebbarer Schieber (3), der ein von außen zugängliches, durch einen in der Breitseite (1) ausgebildeten Ausschnitt (2) ragendes Betätigungselement (4) aufweist, **dadurch gekennzeichnet**, daß der Schieber (3) an einer der beiden Breitseiten (1) des Aufnahmeelements zwischen zwei an der Innenwand (15) der Breitseite (1) angeordneten Führungsstegen (9, 10) einliegt, als ein schmaler Streifen (7) ausgebildet ist, dessen Breite kleiner oder gleich der Breite des Ausschnitts (2) ist, wobei die Länge des Ausschnitts (2) geringfügig kleiner ist als der Abstand des vom rückwärtigem Ende (13) des nach oben am Schieber (3) abstehenden Betätigungselements (4) bis zu dem der Einschuböffnung (16) zugewandten vorderen Ende (14) des Schiebers (3), und einen in den Aufnahmeraum (8) ragenden, an einer im Aufnahmeraum (8) befindlichen Karte angreifenden Mitnehmer (17) aufweist, an dem der Einschuböffnung (16) abgewandten rückwärtigen Ende (13) des Schiebers (3) absteht.

2. Aufnahmeelement nach einem der vorhergehenden Ansprüche, **dadurch gekennzeichnet**, daß das Betätigungselement (4) des Schiebers (3) in die sich in Schieberrichtung erstreckenden, gegenüberliegenden Seitenränder (5, 6) des Ausschnitts (2) übergreift.

3. Aufnahmeelement nach einem der vorhergehenden Ansprüche, **dadurch gekennzeichnet**, daß die Länge des Ausschnitts (2) geringfügig kleiner ist als der Abstand des vorderen Endes (22) des nach oben am Schieber (3) durch den Ausschnitt (2) ragenden Betätigungselements (4) bis zum rückwärtigem Ende (13) des Schiebers (3).

4. Aufnahmeelement nach einem der vorhergehenden Ansprüche, **dadurch gekennzeichnet**, daß wenigstens an einer Schmalseite des Ausschnitts (2) ein nach unten schräg abfallender Begrenzungsrand (11, 12) ausgebildet ist.

5. Aufnahmeelment nach einem der vorhergehenden Ansprüche, **dadurch gekennzeichnet**, daß der Mitnehmer (17) rechtwinklig an dem aus einem schmalen Streifen (7) bestehenden Schieber (3) absteht und an dem rückwärtigem Rand einer eingeschobenen Karte anliegt.

6. Aufnahmeelement nach Anspruch 5, **dadurch gekennzeichnet**, daß der schmale Streifen (7) im nicht eingebauten Zustand vom nach oben abstehenden Betätigungselement (4) zu dessen beiden Seiten nach oben gebogen ist und im eingebauten, geraden Zustand aufgrund seiner elastischen Vorspannung von unten gegen die Innenwand (15) der oberen Breitseite (1) des Aufnahmeelements drückt, wobei das Betätigungselement (4) die Seitenränder (5, 6) des Ausschnitts (2) übergreift.

7. Aufnahmeelement nach einem der vorhergehenden Ansprüche, **dadurch gekennzeichnet**, daß die obere Breitseite (1) ballig nach oben gewölbt ist.

8. Aufnahmeelement nach einem der vorhergehenden Ansprüche, **dadurch gekennzeichnet**, daß der Aufnahmeraum (8) des Aufnahmeelements von einem einstückig gespritzten Kunststoffteil gebildet wird und der Schieber (3) mit Betätigungselement (4) und Mitnehmer (17) ebenfalls ein Kunststoffspritzteil ist.

## Claims

1. Reception element made from plastic for cheque, credit, identity, access control or similar thin-walled cards, which surrounds a flat reception space (8) having on a narrow side a slide-in opening (16) for a card and a slider (3) slidable in the direction (19) of the slide-in opening (16) and which has an externally accessible operating element (4) projecting through a cutout (2) formed in the wide side (1), characterized in that the slider (3) is inserted on one of the two wide sides (1) of the reception element between two guide webs (9, 10) located on the inner wall (15) of the wide side (1) and is constructed as a narrow strip (7), whose width is smaller or identical to the width of the cutout (2), the length of the cutout (2) being slightly smaller than the distance from the rear end (13) of the operating element (4) projecting upwards on the slider (3) to the front end (14) of the slider (3) facing the slide-in opening (16) and has a dog (17) projecting into the reception space (8) and engaging on a card located in said reception space (8) and on which projects the rear end (13) of the slider (3) remote from the slide-in opening (16).

2. Reception element according to claim 1, characterized in that the operating element (4) of the slider (3) engages over the facing lateral edges (5, 6) of the cutout (2) extending in the slider direction.

3. Reception element according to one of the preceding claims, characterized in that the length of the cutout (2) is slightly smaller than the distance from the front end (22) of the operating element (4) projecting upwards on the slider (3) through the cutout (2) to the rear end (13) of the slider (3).

4. Reception element according to one of the preceding claims, characterized in that at least on one narrow side of the cutout (2) is formed a downwardly sloping boundary edge (11, 12).

5. Reception element according to one of the preceding claims, characterized in that the dog (17) projects at right angles from the slider (3) constituted by a narrow strip (7) and engages on the rear edge of a slid-in card.

6. Reception element according to claim 5, characterized in that, in the unfitted state, the narrow strip (7) is bent upwards from the upwardly projecting operating element (4) towards its two sides and in the fitted, straight state, due to its elastic pretension is pressed from below against the inner wall (15) of the upper wide side (1) of the reception element, the operating element (4) engaging over the lateral edges (5, 6) of the cutout (2).

7. Reception element according to one of the preceding claims, characterized in that the upper wide side (1) is upwardly domed.

8. Reception element according to one of the preceding claims, characterized in that the reception space (8) of the reception element is formed by a one-piece plastic injection moulding and the slider (3) with the operating element (4) and dog (17) is also a plastic injection moulding.

## Revendications

1. Etui en plastique pour cartes bancaires, cartes de crédit, cartes d'identité, cartes d'admission ou toutes autres cartes semblables de faible épaisseur, constitué d'une partie intérieure (8) plate, murie d'une fente (16) pour introduire la carte à l'un de ses petits côtés, et d'un dispositif coulissant (3) dans le sens (19) de la fente (16), lequel dispositif coulissant (3) est muni d'un curseur de commande (4) accessible de l'extérieur par une fenêtre (2) de la face latérale au recto (1) de l'étui, **caractérisé en ce que** le dispositif coulissant (3) se déplace sur deux barrettes de guidage (9, 10) se trouvant sur la paroi intérieure (15) de la face latérale au recto (1), ce dispositif coulissant ayant la forme d'une étroite bande (7) dont la largeur est inférieure ou égale à celle de la fenêtre (2) de la face au recto, la longueur de la fenêtre est quant à elle légèrement inférieure à la distance entre l'extrêmité arrière (13) du dispositif coulissant (3), avec son curseur (4) en saillie, et son extrêmité avant (14) côté fente (16) d'introduction de la carte, le dispositif coulissant (3) présentant dans la partie intérieure (8) de l'étui et à l'extrémité arrière (13) du dispositif coulissant (3), un taquet (17) de retenue de la carte introduite dans la partie intérieure (8) de l'étui.

2. Etui selon l'une des revendications ci-avant, **caractérisé en ce que** le curseur de commande (4) du dispositif coulissant (3) recouvre les bords latéraux (5, 6) de la fenêtre (2), lesquels sont parallèles entre eux dans le sens du coulissement.

3. Etui selon l'une des revendications précédentes, **caractérisé en ce que** la longueur de la fenêtre (2) est légèrement inférieure à la distance entre l'extrêmité avant (22) du curseur de commande (4), en saillie à travers la fenêtre (2), et l'extrêmité arrière (13) du dispositif coulissant (3).

4. Etui selon l'une des revendications précédentes, **caractérisé en ce que** un bord de limitation (11, 12) est de forme oblique sur au moins un des petits côtés de la fenêtre (2).

5. Etui selon l'une des revendications précédentes, **caractérisé en ce que** le taquet (17) est monté à angle droit sur le dispositif coulissant (3), lequel est constitué d'une bande étroite (7), le taquet (17) étant en butée avec le bord arrière d'une carte introduite dans l'étui.

6. Etui selon la revendication (5), **caractérisé en ce que** la bande étroite (7) est de forme cintrée avant montage dans l'étui, ses deux extrêmités étant relevées côté curseur, et exerce après montage, en raison de sa tension élastique initiale, une pression sur la paroi intérieure (15) de la face au recto (1) de l'étui, le curseur de commande venant recouvrir les bords latéraux (5, 6) de la fenêtre (2).

7. Etui selon l'une des revendications précédentes, **caractérisé en ce que** la face au recto (1) de l'étui présente une forme bombée.

8. Etui selon l'une des revendications précédentes, **caractérisé en ce que** la partie intérieure (8) est constituée d''une seule pièce en plastique, moulée par injection, et que le dispositif coulissant (3), avec son curseur de commande (4) et son taquet (17), est également d'une seule pièce en plastique, moulée par injection.
